(19) Europäisches Patentamt
European Patent Office
Office européen des brevets

(11) **EP 3 764 104 B1**

(12) **FASCICULE DE BREVET EUROPEEN**

(45) Date de publication et mention
de la délivrance du brevet:
**04.05.2022 Bulletin 2022/18**

(21) Numéro de dépôt: **20182363.0**

(22) Date de dépôt: **25.06.2020**

(51) Classification Internationale des Brevets (IPC):
*G01P 5/24* (2006.01)      *G01F 1/66* (2022.01)

(52) Classification Coopérative des Brevets (CPC):
**G01P 5/245; G01F 1/667**

(54) **PROCEDE DE MESURE DE LA VITESSE D'UN FLUIDE, COMPTEUR DE FLUIDE À ULTRASON, PROGRAMME D'ORDINATEUR ET MOYENS DE STOCKAGE**

VERFAHREN ZUR MESSUNG DER GESCHWINDIGKEIT EINES FLUIDS, ULTRASCHALLFLUIDMETER, COMPUTERPROGRAMM UND SPEICHERMITTEL

METHOD FOR MEASURING THE SPEED OF A FLUID, ULTRASONIC FLUID METER, COMPUTER PROGRAM AND STORAGE MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2019 FR 1907869**

(43) Date de publication de la demande:
**13.01.2021 Bulletin 2021/02**

(73) Titulaire: **Sagemcom Energy & Telecom SAS 92500 Rueil-Malmaison (FR)**

(72) Inventeur: **TEBOULLE, Henri 92500 Rueil Malmaison (FR)**

(74) Mandataire: **Lavaud, Thomas et al Cabinet Boettcher 16, rue Médéric 75017 Paris (FR)**

(56) Documents cités:
**EP-A1- 0 051 293       EP-A2- 0 670 477
WO-A1-2019/002145   US-A- 4 782 697
US-A1- 2004 107 779**

• **VON JENA A ET AL: "Ultrasound gas-flow meter for household application", SENSORS AND ACTUATORS A: PHYSICAL, ELSEVIER BV, NL, vol. 37-38, 1 juin 1993 (1993-06-01), pages 135-140, XP026576876, ISSN: 0924-4247 [extrait le 1993-06-01]**

**Description**

L'invention concerne le domaine des compteurs de fluide à ultrason.

ARRIERE PLAN DE L'INVENTION

Un compteur de fluide à ultrason utilise classiquement, pour mesurer le débit d'un fluide circulant dans un tuyau, un dispositif de mesure de la vitesse du fluide par émission et réception de signaux ultrasoniques.

Le dispositif de mesure comporte un conduit, raccordé au tuyau, dans lequel circule le fluide. Pour mesurer la vitesse du fluide, on émet dans le conduit des signaux ultrasoniques parcourant un trajet de longueur définie, on mesure les temps de trajet mis par les signaux ultrasoniques pour parcourir le trajet de longueur définie d'amont en aval et d'aval en amont, et on estime la vitesse du fluide à partir notamment de la longueur définie et de la différence entre les temps de trajet.

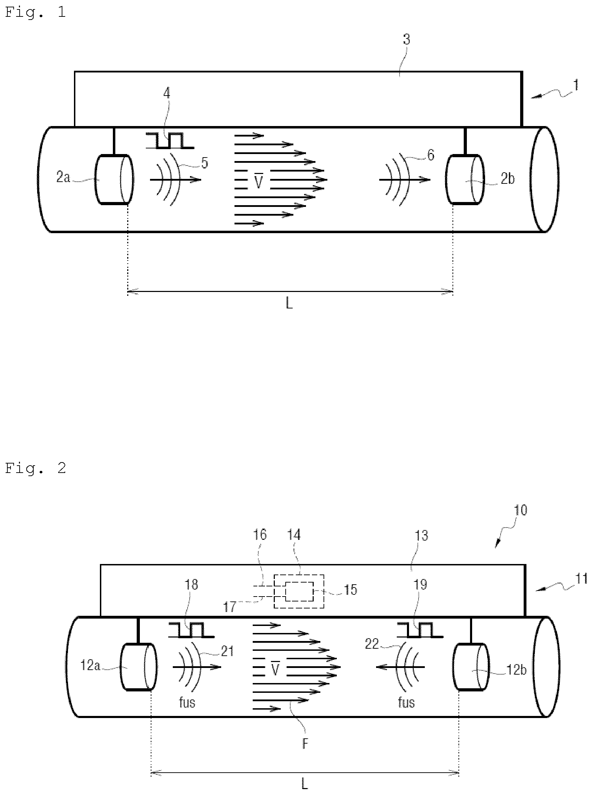

Un tel dispositif de mesure 1, parfois désigné par les termes anglais *classical pipe,* est visible sur la figure 1. Le dispositif de mesure 1 comporte un premier transducteur 2a, un deuxième transducteur 2b, et un module de mesure 3 relié au premier transducteur 2a et au deuxième transducteur 2b.

Le premier transducteur 2a et le deuxième transducteur 2b sont appairés en fréquence et en niveau d'émission. Le premier transducteur 2a et le deuxième transducteur 2b sont par exemple des transducteurs piézoélectriques.

Le trajet de longueur définie est donc ici un trajet rectiligne de longueur L entre le premier transducteur 2a et le deuxième transducteur 2b.

Le module de mesure 3 produit un signal électrique d'excitation 4 qui est appliqué en entrée du premier transducteur 2a.

Le premier transducteur 2a émet à partir du signal électrique d'excitation 4 un signal ultrasonique 5. Le deuxième transducteur 2b reçoit un signal ultrasonique 6 résultant de la propagation dans le fluide du signal ultrasonique 5.

Le module de mesure 3 mesure le temps de trajet mis par le signal ultrasonique 5 pour parcourir le trajet de longueur définie d'amont en aval.

Le module de mesure 3 mesure en réalité un temps de transfert global $T_{AB}$ du premier transducteur 2a vers le deuxième transducteur 2b.

Le temps de transfert global $T_{AB}$ est tel que :

$$T_{AB} = TA_A + ToF_{AB} + TR_B,$$

où :

- $TA_A$ est un temps d'allumage du premier transducteur 2a ;
- $ToF_{AB}$ correspond au temps de vol (*Time of Flight,* en anglais) mis par le signal ultrasonique 5 pour parcourir le trajet de longueur définie entre le premier transducteur 2a et le deuxième transducteur 2b ;
- $TR_B$ est un temps de réception du deuxième transducteur 2b.

De même, le deuxième transducteur 2b émet un signal ultrasonique qui est reçu par le premier transducteur 2a.

Le module de mesure 3 mesure le temps de transfert global $T_{BA}$ qui est tel que :

$$T_{BA} = TA_B + ToF_{BA} + TR_A,$$

où :

- $TA_B$ est un temps d'allumage du deuxième transducteur 2b ;
- $ToF_{BA}$ correspond au temps de vol mis par le signal ultrasonique pour parcourir le trajet de longueur définie entre le deuxième transducteur 2b et le premier transducteur 2a ;
- $TR_A$ est un temps de réception du premier transducteur 2a. En supposant que :
  $TA_A = TA_B$ et $TR_A = TR_B$ (transducteurs appairés), on obtient :

$$\Delta T = T_{BA} - T_{AB} = ToF_{BA} - ToF_{AB} = DToF,$$

où DToF est le temps de vol différentiel (*Differential Time of Flight).*

Or, le DToF est proportionnel à la vitesse moyenne *V* du fluide, et le module de mesure 3 calcule alors la vitesse moyenne $\overline{V}$ du fluide en utilisant la formule :

$$DToF = 2L . \overline{V} / (C^2 - \overline{V}^2),$$

où C est la vitesse d'une onde ultrasonique dans le fluide. Par exemple, la vitesse d'une onde ultrasonique dans l'eau est égale à environ 1500m/s, et dépend de la température de l'eau.

Le module de mesure 3 déduit alors de la vitesse moyenne $\overline{V}$, signée, le débit du fluide circulant dans le tuyau.

Un compteur de fluide à ultrason, tel que celui qui vient d'être décrit, est généralement alimenté par une ou plusieurs piles intégrées dans le compteur.

Or, les spécifications fonctionnelles d'un tel compteur exigent classiquement que celui-ci ait une durée de vie très importante sans changer la ou les piles, typiquement égale à 20 ans. Pour des raisons de coût et d'intégration, il est essentiel de limiter la taille et le nombre de pile(s) utilisée(s). Il convient donc d'assurer que la consommation électrique du dispositif de mesure soit aussi faible que possible. Cette limitation de la consommation électrique ne doit bien sûr pas conduire à une dégradation de la précision de la mesure du débit du fluide.

Les procédés et les dispositifs pour mesurer la vitesse d'un fluide au moyen d'ultrasons, avec réduction de la consommation d'énergie, sont connus du document EP 0 670 477 (réduction de la consommation d'énergie par la mise en veille) et des documents US 4 782 697 et US 2004/107779 (réduction de la consommation d'énergie par la désactivation des composants).

L'invention a pour objet de réduire la consommation électrique d'un compteur de fluide à ultrason, et d'augmenter la précision des mesures de débit réalisées par ledit compteur de fluide à ultrason.

RESUME DE L'INVENTION

En vue de la réalisation de ce but, on propose un procédé de mesure d'une vitesse d'un fluide, mis en œuvre dans un dispositif de mesure comportant un premier transducteur, un deuxième transducteur et un module de mesure comprenant un composant de traitement, le procédé de mesure comportant au moins une première phase de mesure comprenant les étapes successives de :

- faire émettre par le composant de traitement, à un même temps d'émission, un premier signal électrique d'excitation qui est appliqué en entrée du premier transducteur et un deuxième signal électrique d'excitation qui est appliqué en entrée du deuxième transducteur, de sorte que le premier transducteur génère un premier signal ultrasonique qui parcourt dans le fluide, jusqu'au deuxième transducteur, un trajet de longueur définie, et de sorte que le deuxième transducteur génère un deuxième signal ultrasonique qui parcourt dans le fluide, jusqu'au premier transducteur, le trajet de longueur définie dans un sens opposé ;
- mettre le composant de traitement en veille ;
- réactiver le composant de traitement après une durée de veille prédéterminée ;
- faire acquérir par le deuxième transducteur puis par le composant de traitement le premier signal ultrasonique, et par le premier transducteur puis par le composant de traitement le deuxième signal ultrasonique ;
- estimer une valeur DToF d'une différence entre un deuxième temps de vol du deuxième signal ultrasonique et un premier temps de vol du premier signal ultrasonique, et utiliser la valeur DToF pour estimer la vitesse du fluide.

Le composant de traitement est ainsi mis en veille, lors de chaque première phase de mesure, pendant une durée de veille prédéterminée. Au cours de cette durée de veille prédéterminée, la consommation électrique du composant de traitement est presque nulle, de sorte que l'on réduit de manière importante la consommation électrique du dispositif de mesure.

Comme le premier signal électrique d'excitation et le deuxième signal électrique d'excitation sont émis en même temps, l'émission du premier signal ultrasonique et l'émission du deuxième signal ultrasonique sont parfaitement synchronisées. La perte de la référence de temps, qui résulte de la mise en veille du composant de traitement, n'est donc pas pénalisante pour estimer la valeur DToF, et les mesures de vitesse du fluide réalisées sont très précises.

On propose aussi un procédé de mesure tel que celui qui vient d'être décrit, comprenant en outre au moins une deuxième phase de mesure utilisée pour estimer une valeur SumToF d'une somme du premier temps de vol et du deuxième temps de vol, l'estimation de la vitesse du fluide utilisant aussi la valeur SumToF.

On propose aussi un procédé de mesure tel que celui qui vient d'être décrit, la deuxième phase de mesure étant semblable à la première phase de mesure mais ne comprenant pas l'étape de mettre en veille le composant de traitement.

On propose aussi un procédé de mesure tel que celui qui vient d'être décrit, dans lequel plusieurs premières phases de mesure sont mises en œuvre entre deux deuxièmes phases de mesure successives, et dans lequel, à chaque première phase de mesure, la vitesse du fluide est estimée en utilisant la valeur SumToF obtenue au cours de la dernière deuxième phase de mesure précédant ladite première phase de mesure.

On propose aussi un procédé de mesure tel que celui qui vient d'être décrit, dans lequel la vitesse du fluide est estimée par la formule :

$$\bar{V} = 2L.\frac{DToF}{SumToF^2 - DToF^2}$$

où L est la longueur définie du trajet.

On propose aussi un procédé de mesure tel que celui qui vient d'être décrit, le composant de traitement étant un microcontrôleur dans lequel est intégré un convertisseur analogique numérique ayant une première entrée et une deuxième entrée multiplexées, la première phase de mesure comprenant l'étape d'appliquer, après sa réception, le premier signal ultrasonique sur la première entrée pour être numérisé, et l'étape d'appliquer, après sa réception, le deuxième signal ultrasonique sur la deuxième entrée pour être numérisé.

On propose en outre un procédé de mesure tel que celui qui vient d'être décrit, comprenant en outre une phase de calibration comprenant l'étape de compenser un déphasage entre des échantillonnages, produits par le convertisseur analogique numérique, du premier signal ultrasonique et du deuxième signal ultrasonique.

On propose aussi un procédé de mesure tel que celui qui vient d'être décrit, le composant de traitement étant un microcontrôleur dans lequel sont intégrés un premier convertisseur analogique numérique ayant une première entrée et un deuxième convertisseur analogique ayant une deuxième entrée, la première phase de mesure comprenant l'étape d'appliquer, après sa réception, le premier signal ultrasonique sur la première entrée pour être numérisé, et l'étape d'appliquer, après sa réception, le deuxième signal ultrasonique sur la deuxième entrée pour être numérisé.

On propose aussi un procédé de mesure tel que celui qui vient d'être décrit, dans lequel le premier signal ultrasonique et le deuxième signal ultrasonique comprennent chacun successivement des lobes préliminaires puis des lobes de mesure, les lobes de mesure étant utilisés pour estimer la valeur DToF, les lobes préliminaires étant inutilisés car possiblement imprécis, la durée de veille prédéterminée étant telle que le composant de traitement est réactivé après qu'au moins certains des lobes préliminaires du premier signal ultrasonique ont été reçus par le deuxième transducteur, et qu'au moins certains des lobes préliminaires du deuxième signal ultrasonique ont été reçus par le premier transducteur.

On propose aussi un procédé de mesure tel que celui qui vient d'être décrit, dans lequel la valeur DToF est estimée en mettant en œuvre sur le premier signal ultrasonique et sur le deuxième signal ultrasonique une méthode du type « Zero Crossing ».

On propose aussi un procédé de mesure tel que celui qui vient d'être décrit, dans lequel la valeur DToF est estimée en mettant en œuvre sur le premier signal ultrasonique et sur le deuxième signal ultrasonique une méthode d'intercorrélation.

On propose en outre un compteur de fluide à ultrason comportant un premier transducteur, un deuxième transducteur, et un module de mesure relié au premier transducteur et au deuxième transducteur, le compteur de fluide à ultrason étant agencé pour mettre en œuvre le procédé de mesure qui vient d'être décrit.

On propose de plus un programme d'ordinateur comprenant des instructions pour mettre en œuvre, par un microcontrôleur d'un compteur de fluide à ultrason, le procédé de mesure qui vient d'être décrit.

On propose de plus des moyens de stockage, caractérisés en ce qu'ils stockent un programme d'ordinateur comprenant des instructions pour mettre en œuvre, par un microcontrôleur d'un compteur de fluide à ultrason, le procédé de mesure qui vient d'être décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

[Fig. 1] la figure 1 représente un compteur de fluide à ultrason de l'art antérieur ;
[Fig. 2] la figure 2 représente un compteur de fluide à ultrason dans lequel est mis en œuvre le procédé de mesure d'une vitesse d'un fluide selon l'invention ;
[Fig. 3] la figure 3 représente le premier signal ultrasonique reçu après qu'il a parcouru dans le fluide un trajet de longueur définie, et un axe des temps sur lequel est représentée la durée de veille prédéterminée pendant laquelle le composant de traitement est en veille.

DESCRIPTION DETAILLEE DE L'INVENTION

En référence à la figure 2, le procédé de mesure d'une vitesse d'un fluide selon l'invention est ici mis en œuvre dans un compteur d'eau à ultrason 10.

Le compteur d'eau à ultrason 10 comporte un conduit dans lequel circule de l'eau fournie par un réseau de distribution à une installation, ainsi qu'un dispositif de mesure de la vitesse de l'eau 11.

L'eau circule dans le conduit d'amont en aval, comme cela est indiqué par le sens des flèches F, mais pourrait tout aussi bien circuler d'aval en amont.

Le dispositif de mesure 11 comporte un premier transducteur 12a, un deuxième transducteur 12b, et un module de mesure 13 relié au premier transducteur 12a et au deuxième transducteur 12b.

Le premier transducteur 12a et le deuxième transducteur 12b sont appairés. Le premier transducteur 12a et le deuxième transducteur 12b sont ici des transducteurs piézoélectriques.

Le module de mesure 13 comporte un composant de traitement adapté à exécuter des instructions d'un programme pour mettre en œuvre le procédé de mesure selon l'invention. Le composant de traitement est ici un microcontrôleur 14. Un convertisseur analogique numérique 15 est intégré dans le microcontrôleur 14. Le convertisseur analogique numérique 15 comprend une première entrée 16 et une deuxième entrée 17 qui sont multiplexées.

Comme on l'a vu plus tôt, on peut déterminer la vitesse moyenne $\bar{V}$ du fluide en utilisant la formule : $DToF=2L.\bar{V}/(C^2-\bar{V}^2)$, où C est la vitesse d'une onde ultrasonique dans le fluide.

Or, C dépend de la température du fluide.

On montre que la vitesse $\bar{V}$ du fluide peut aussi s'exprimer via une formule qui élimine C, et donc qui ne nécessite pas de mesurer la température du fluide :

$$\bar{V} = 2L.\frac{DToF}{SumToF^2 - DToF^2}$$

où SumToF est la somme du premier temps de vol et du deuxième temps de vol.

En utilisant le SumToF, on s'affranchit donc de

4

toute mesure de la température de l'eau et on baisse ainsi le coût du dispositif de mesure 11.

Le procédé de mesure selon l'invention va permettre de déterminer précisément le SumTof et le DToF, tout en réduisant de manière très importante la consommation électrique du dispositif de mesure 11 et donc du compteur d'eau à ultrason 10.

Le procédé de mesure selon l'invention fonctionne de la manière suivante.

Le procédé de mesure comprend des premières phases de mesure et des deuxièmes phases de mesure.

On décrit tout d'abord une première phase de mesure.

On fait émettre par le microcontrôleur 14 un premier signal électrique d'excitation 18 qui est appliqué en entrée du premier transducteur 12a et un deuxième signal électrique d'excitation 19 qui est appliqué en entrée du deuxième transducteur 12b.

Par « on fait émettre », on entend que c'est le microcontrôleur 14 qui commande l'émission du premier signal électrique d'excitation 18 et du deuxième signal électrique d'excitation 19. Le premier signal électrique d'excitation 18 et le deuxième signal électrique d'excitation 19 sont donc soit générés directement par le microcontrôleur 14, soit par un autre composant qui est piloté par le microcontrôleur 14.

Le premier signal électrique d'excitation 18 est un signal rectangulaire de fréquence fus et de rapport cyclique 1/2. De même, le deuxième signal électrique d'excitation 19 est un signal rectangulaire de fréquence fus et de rapport cyclique 1/2. La fréquence fus est classiquement comprise entre 900kHz et 4MHz, et est ici (cas où le fluide est de l'eau) égale à 2MHz. Dans le cas où le fluide est un gaz, la fréquence fus est classiquement de l'ordre de quelques dizaines de KHz.

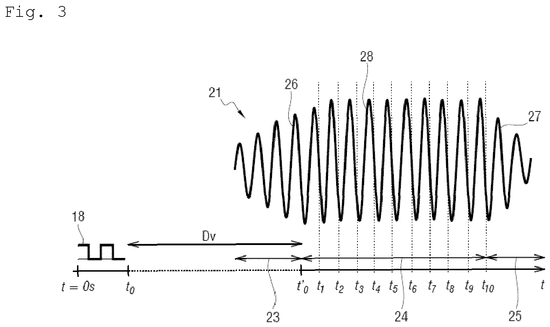

En référence à la figure 3, le premier signal électrique d'excitation 18 et le deuxième signal électrique d'excitation 19 (non représenté sur la figure 3) sont émis exactement au même moment, à un même temps d'émission t=0s (qui correspond au premier front du premier signal électrique d'excitation 18 et au premier front du deuxième signal électrique d'excitation 19). Le premier signal électrique d'excitation 18 et le deuxième signal électrique d'excitation 19 sont donc appliqués en même temps respectivement en entrée du premier transducteur 12a et en entrée du deuxième transducteur 12b. Cette synchronisation parfaite est permise par le fait que c'est le microcontrôleur 14 qui contrôle le temps d'émission de ces deux signaux électriques d'excitation.

Le premier transducteur 12a génère alors, sous l'effet du premier signal d'excitation 18, un premier signal ultrasonique 21 qui parcourt dans le fluide, jusqu'au deuxième transducteur 12b, un trajet de longueur définie L. Le deuxième transducteur 12b génère quant à lui, sous l'effet du deuxième signal électrique d'excitation 19, un deuxième signal ultrasonique 22 qui parcourt dans le fluide, jusqu'au premier transducteur 12a, le trajet de longueur définie L dans un sens opposé.

On note que, du fait de la linéarité du phénomène de transmission d'ultrasons au sein d'un fluide circulant dans un conduit, la transmission simultanée, par le premier transducteur 12a et le deuxième transducteur 12b, du premier signal ultrasonique 21 et du deuxième signal ultrasonique 22, de formes d'onde identiques en l'occurrence, ne crée pas de perturbation à la réception à l'autre bout du conduit par chacun des premier transducteur 12a et deuxième transducteur 12b. Des interférences se produisent bien lorsque les ondes se croisent au milieu du conduit, mais aucun changement de la forme d'onde ne se produit à chaque réception une fois passée la zone d'interférence.

Après que le premier signal électrique d'excitation 18 et le deuxième signal électrique d'excitation 19 ont été entièrement émis, c'est-à-dire au temps $t_0$, le microcontrôleur 14 se met en veille. Sa consommation électrique est donc presque nulle.

Puis, le microcontrôleur 14 est réactivé après une durée de veille prédéterminée.

Le deuxième transducteur 12b puis le microcontrôleur 14 acquièrent le premier signal ultrasonique 21. Le premier transducteur 12a puis le microcontrôleur 14 acquièrent le deuxième signal ultrasonique 22. Le microcontrôleur 14 analyse alors le premier signal ultrasonique 21 et le deuxième signal ultrasonique 22 après leur réception, et déduit de cette analyse la vitesse de l'eau.

Comme on le voit sur la figure 3, après sa réception par le deuxième transducteur 12b, le premier signal ultrasonique 21 comprend une zone préliminaire 23, une zone de mesure 24 et une zone finale 25. Le deuxième signal ultrasonique 22 n'est pas représenté sur la figure 3 mais présente après sa réception une forme similaire.

La zone préliminaire 23 correspond à une zone dans laquelle la fréquence du premier signal ultrasonique 21, lorsqu'il est émis, n'est pas encore égale précisément à la fréquence fus du premier signal électrique d'excitation 18. La fréquence du premier signal ultrasonique 21, lorsqu'il est reçu par le deuxième transducteur 12b, n'est donc pas encore précisément calée sur celle du premier signal électrique d'excitation 18, mais correspond plutôt à la fréquence de résonance du piézoélectrique. La zone préliminaire 23 comprend ici quatre lobes préliminaires 26. Ici, par « lobe », on entend une demi-période positive du premier signal ultrasonique 21 reçu.

La zone finale 25 correspond à une portion du premier signal ultrasonique 21 qui, préalablement à sa réception par le transducteur 12b, est passée par des zones métalliques du compteur 10. La zone finale 25 correspond au phénomène appelé « multi-trajet ». Dans la zone finale 25, le premier signal ultrasonique 21 reçu est bruité par les multi-trajets. La zone finale comprend ici deux lobes finaux 27.

Dans la zone de mesure 24, par contre, la fréquence du premier signal ultrasonique 21 reçu est bien égale à la fréquence fus. La zone de mesure 24 comprend dix lobes de mesure 28.

On ne tient pas compte de la zone préliminaire 23 et de la zone finale 25, car les lobes préliminaires 26 et les lobes finaux 27 sont imprécis. On améliore ainsi la précision de la mesure de la vitesse du fluide.

On remarque que la durée de veille prédéterminée, pendant laquelle le microcontrôleur 14 est mis en veille, est telle que le microcontrôleur 14 est réactivé après qu'au moins certains des lobes préliminaires 26 du premier signal ultrasonique 21 ont déjà été reçus par le deuxième transducteur 12b. Ici, en l'occurrence, le microcontrôleur 14 est réactivé à l'instant $t'_0$, qui survient après la réception du quatrième lobe préliminaire 26, à peu près au moment où le front descendant du quatrième lobe préliminaire 26 passe par zéro.

De même, le microcontrôleur 14 est réactivé après qu'au moins certains des lobes préliminaires 26 du deuxième signal ultrasonique 22 ont été reçus par le premier transducteur 12a.

La durée entre le temps t=0s et le temps t10, qui correspond à la fin de la mesure, est de l'ordre de 75$\mu$s, pour un dispositif de mesure 11 dans lequel la longueur définie L du trajet est égale à 7cm.

La durée de veille prédéterminée $D_v$, qui s'étend entre le temps $t_0$ et le temps $t'_0$, correspond au trajet dans l'eau du premier signal ultrasonique 21 et du deuxième signal ultrasonique 22, et est de l'ordre de 50$\mu$s (=$t'_0$-$t_0$).

On réduit ainsi de 2/3 le temps de consommation du microcontrôleur 14.

Le premier signal ultrasonique 21 est alors appliqué sur la première entrée 16 du convertisseur analogique numérique 15 pour être numérisé. Le deuxième signal ultrasonique 22 est alors appliqué sur la deuxième entrée 17 du convertisseur analogique numérique 15 pour être numérisé. Pour un signal de fréquence fus = 2MHz, la fréquence d'échantillonnage est typiquement de 8MHz afin de respecter le critère de Shannon.

Le premier signal ultrasonique 21 et le deuxième signal ultrasonique 22 sont échantillonnés quasi-simultanément. Il existe tout de même un déphasage entre les échantillonnages.

Le procédé de mesure selon l'invention comprend donc une phase de calibration en usine, au cours de laquelle le déphasage entre les échantillonnages du premier signal ultrasonique 21 et du deuxième signal ultrasonique 22 est compensé.

Le microcontrôleur 14 estime alors un premier temps de mesure. Le premier temps de mesure est ici l'un des temps de passage par zéro $t_1,..., t_k$ du premier signal ultrasonique 21 dans la zone de mesure 24. On considère que le premier temps de mesure est un i$^{\text{ème}}$ temps de passage par zéro (c'est-à-dire le $t_i$) du premier signal ultrasonique 21 dans sa zone de mesure 24.

Le microcontrôleur 14 estime aussi un deuxième temps de mesure. Le deuxième temps de mesure est l'un des temps de passage par zéro $t_1,..., t_k$ du deuxième signal ultrasonique 22 dans la zone de mesure 24. Le deuxième temps de mesure est aussi le i$^{\text{ème}}$ temps

de passage par zéro (c'est-à-dire le $t_i$) du deuxième signal ultrasonique 22 dans sa zone de mesure 24.

Pour chacun des premier signal ultrasonique 21 et deuxième signal ultrasonique 22, le temps de passage par zéro $t_i$ est mesuré par une méthode du type « *Zero Crossing* » qui utilise une interpolation sinusoïdale réalisée sur les échantillons de mesure de chaque lobe de mesure 28 de la zone de mesure 24.

Comme le microcontrôleur 14 a été mis en veille pendant la durée de veille prédéterminée $D_v$, le premier temps de mesure et le deuxième temps de mesure ne permettent pas d'obtenir directement de manière précise le $ToF_{AB}$ et le $ToF_{BA}$.

Le microcontrôleur 14 calcule donc une différence entre le deuxième temps de mesure et le premier temps de mesure.

Comme le premier signal électrique d'excitation 21 et le deuxième signal électrique d'excitation 22 ont été générés exactement au même temps d'émission, la référence de temps s'annule et on a :

$$t_{mes2} - t_{mes1} = ToF_{BA} - ToF_{AB} = DToF,$$

où $t_{mes1}$ est le premier temps de mesure et $t_{mes2}$ est le deuxième temps de mesure.

Les bruits d'émission relatifs au premier signal d'excitation 21 et au deuxième signal d'excitation 22 sont identiques et s'annulent lors de la mesure du DToF.

On a donc mesuré le DToF au cours de la première phase de mesure.

Comme on l'a vu plus tôt, l'estimation de la vitesse du fluide sans mesurer la température nécessite aussi de connaître le SumToF.

Le SumToF est mesuré au cours d'une deuxième phase de mesure.

La deuxième phase de mesure est semblable à la première phase de mesure, si ce n'est que le microcontrôleur 14 n'est pas mis en veille.

Le microcontrôleur 14 émet donc (ou fait émettre) le premier signal électrique d'excitation 18 et le deuxième signal électrique d'excitation 19, puis reçoit le premier signal ultrasonique 21 et le deuxième signal ultrasonique 22 après qu'ils ont parcouru le trajet de longueur définie L dans des sens opposés.

Le convertisseur analogique numérique 15 échantillonne le premier signal ultrasonique 21 et le deuxième signal ultrasonique 22 après leur réception. Le microcontrôleur 14 détermine le premier temps de mesure qui correspond cette fois bien au $ToF_{AB}$, et le deuxième temps de mesure qui correspond cette fois bien au $ToF_{BA}$.

Le microcontrôleur 14 calcule alors la somme des temps de vol totale SumToF_tot de la manière suivante :

$$SumToF\_tot = ToF_{AB} + ToF_{BA},$$

et la somme des temps de vol SumToF en soustrayant à la somme des temps de vol totale SumToF_tot les temps d'allumage $TA_A$, $TA_B$ et les temps de réception $TR_A$, $TR_B$ qui sont déterminés lors d'une phase de calibration du dispositif de mesure 11.

Le microcontrôleur 14 peut ainsi estimer précisément la vitesse du fluide.

On note que le SumToF dépend principalement de la longueur définie L du trajet et de la température de l'eau, car il dépend de la vitesse C du son dans l'eau qui elle-même dépend de la température de l'eau. Le Sum-Tof varie de manière non significative par rapport à la vitesse de l'eau, car cette dernière est négligeable devant C. La température de l'eau varie de manière très lente.

Il n'est donc pas nécessaire de produire une nouvelle mesure du SumToF à chaque fois que l'on génère une nouvelle estimation de la vitesse de l'eau.

Par exemple, si l'on réalise 8 mesures métrologiques par seconde, c'est-à-dire si l'on fournit une nouvelle mesure de la vitesse de l'eau 8 fois par seconde, on ne mesure le SumToF qu'une fois toutes les 2 secondes (c'est-à-dire une fois sur seize). On considère en effet que la température de l'eau ne varie pas significativement dans un laps de temps aussi court. On note que lors de la mesure du SumToF, on mesure également le DToF.

On met donc en œuvre un certain nombre de premières phases de mesure entre deux deuxième phases de mesure successives.

A l'issue de chaque première phase de mesure, on calcule la vitesse de l'eau en utilisant le DToF estimé au cours de ladite première phase de mesure, et le Sum-ToF et le DToF estimés au cours de la dernière deuxième phase de mesure précédant ladite première phase de mesure. Comme la longueur définie L du trajet ne varie pas et que la température de l'eau varie très lentement, le SumToF varie très peu entre deux deuxièmes phases de mesure. Cette méthode est donc très précise et permet de diminuer la consommation électrique grâce aux mises en veille du microcontrôleur 14 au cours de chaque première phase.

On note que l'invention est entièrement numérique et est donc implémentable sous forme purement logicielle.

Ainsi, par rapport à la plupart des dispositifs de mesure de vitesse de fluide connus, qui sont principalement analogiques, l'invention est à la fois moins coûteuse, moins complexe, plus précise, et présente une consommation électrique nettement inférieure.

Bien entendu, l'invention n'est pas limitée au mode de réalisation décrit mais englobe toute variante entrant dans le champ de l'invention telle que définie par les revendications.

L'invention s'applique bien sûr quels que soient le positionnement et la configuration du premier transducteur et du deuxième transducteur. Les signaux ultrasoniques peuvent être émis avec une orientation d'un angle quelconque par rapport à un axe longitudinal du conduit. Les signaux ultrasoniques peuvent être réfléchis par des réflecteurs, par exemple par des miroirs orientés à 45°.

Le fluide dont la vitesse et le débit sont mesurés n'est pas nécessairement de l'eau, mais pourrait être par exemple du pétrole, du gaz, etc.

Pour mesurer le SumToF et le DToF, on a utilisé ici une méthode du type « *Zero Crossing* ». Le SumToF et le DToF peuvent parfaitement être estimés en utilisant une méthode différente, par exemple une méthode d'intercorrélation.

On a utilisé ici un microcontrôleur qui comprend un unique convertisseur analogique numérique ayant deux entrées multiplexées. Cette configuration est peu coûteuse mais, comme on l'a vu, nécessite de compenser un léger déphasage au cours d'une phase de calibration.

On pourrait alternativement utiliser un microcontrôleur dans lequel sont intégrés un premier convertisseur analogique numérique ayant une première entrée, et un deuxième convertisseur analogique ayant une deuxième entrée. On applique alors, après sa réception, le premier signal ultrasonique sur la première entrée du premier convertisseur analogique numérique pour être numérisé. On applique aussi, après sa réception, le deuxième signal ultrasonique sur la deuxième entrée du deuxième convertisseur analogique numérique pour être numérisé. Dans ce cas, les instants d'échantillonnage des deux réceptions des transducteurs sont parfaitement synchronisés. Cette solution, légèrement plus précise que la première, est en contrepartie plus coûteuse, car les microcontrôleurs ayant deux vrais convertisseurs analogiques numériques sont plus onéreux.

**Revendications**

1. Procédé de mesure d'une vitesse d'un fluide, mis en œuvre dans un dispositif de mesure (11) comportant un premier transducteur (12a), un deuxième transducteur (12b) et un module de mesure (13) comprenant un composant de traitement (14), le procédé de mesure comportant au moins une première phase de mesure comprenant les étapes successives de :

- faire émettre par le composant de traitement (14), à un même temps d'émission, un premier signal électrique d'excitation (18) qui est appliqué en entrée du premier transducteur et un deuxième signal électrique d'excitation (19) qui est appliqué en entrée du deuxième transducteur, de sorte que le premier transducteur (12a) génère un premier signal ultrasonique (21) qui parcourt dans le fluide, jusqu'au deuxième transducteur (12b), un trajet de longueur définie (L), et de sorte que le deuxième transducteur (12b) génère un deuxième signal ultrasonique (22) qui parcourt dans le fluide, jusqu'au premier transducteur (12a), le trajet de longueur définie dans un sens opposé ;
- mettre le composant de traitement (14) en veille ;
- réactiver le composant de traitement (14) après une durée de veille prédéterminée ($D_v$) ;
- faire acquérir par le deuxième transducteur puis par le composant de traitement le premier signal ultrasonique, et par le premier transducteur puis par le composant de traitement le deuxième signal ultrasonique ;
- estimer une valeur DToF d'une différence entre un deuxième temps de vol du deuxième signal ultrasonique (22) et un premier temps de vol du premier signal ultrasonique (21), et utiliser la valeur DToF pour estimer la vitesse du fluide.

2. Procédé de mesure selon la revendication 1, comprenant en outre au moins une deuxième phase de mesure utilisée pour estimer une valeur SumToF d'une somme du premier temps de vol et du deuxième temps de vol, l'estimation de la vitesse du fluide utilisant aussi la valeur SumToF.

3. Procédé de mesure selon la revendication 2, la deuxième phase de mesure étant semblable à la première phase de mesure mais ne comprenant pas l'étape de mettre en veille le composant de traitement (14).

4. Procédé de mesure selon la revendication 2, dans lequel plusieurs premières phases de mesure sont mises en œuvre entre deux deuxièmes phases de mesure successives, et dans lequel, à chaque première phase de mesure, la vitesse du fluide est estimée en utilisant la valeur SumToF obtenue au cours de la dernière deuxième phase de mesure précédant ladite première phase de mesure.

5. Procédé de mesure selon la revendication 2, dans lequel la vitesse du fluide est estimée par la formule :

$$\bar{V} = 2L.\frac{DToF}{SumToF^2 - DToF^2}$$

où L est la longueur définie du trajet.

6. Procédé de mesure selon l'une des revendications précédentes, le composant de traitement étant un microcontrôleur (14) dans lequel est intégré un convertisseur analogique numérique (15) ayant une première entrée (16) et une deuxième entrée (17) multiplexées, la première phase de mesure comprenant l'étape d'appliquer, après sa réception, le premier signal ultrasonique (21) sur la première entrée (16) pour être numérisé, et l'étape d'appliquer, après sa réception, le deuxième signal ultrasonique (22) sur la deuxième entrée (17) pour être numérisé.

7. Procédé de mesure selon la revendication 6, comprenant en outre une phase de calibration comprenant l'étape de compenser un déphasage entre des échantillonnages, produits par le convertisseur analogique numérique (15), du premier signal ultrasonique (21) et du deuxième signal ultrasonique (22) .

8. Procédé de mesure selon l'une des revendication 1 à 5, le composant de traitement étant un microcontrôleur dans lequel sont intégrés un premier convertisseur analogique numérique ayant une première entrée et un deuxième convertisseur analogique ayant une deuxième entrée, la première phase de mesure comprenant l'étape d'appliquer, après sa réception, le premier signal ultrasonique (21) sur la première entrée pour être numérisé, et l'étape d'appliquer, après sa réception, le deuxième signal ultrasonique (22) sur la deuxième entrée pour être numérisé.

9. Procédé de mesure selon la revendication 1, dans lequel le premier signal ultrasonique (21) et le deuxième signal ultrasonique (22) comprennent chacun successivement des lobes préliminaires (26) puis des lobes de mesure (28), les lobes de mesure (28) étant utilisés pour estimer la valeur DToF, les lobes préliminaires (26) étant inutilisés car possiblement imprécis, la durée de veille prédéterminée ($D_v$) étant telle que le composant de traitement est réactivé après qu'au moins certains des lobes préliminaires (26) du premier signal ultrasonique (21) ont été reçus par le deuxième transducteur, et qu'au moins certains des lobes préliminaires (26) du deuxième signal ultrasonique (22) ont été reçus par le premier transducteur.

10. Procédé de mesure selon la revendication 1, dans lequel la valeur DToF est estimée en mettant en œuvre sur le premier signal ultrasonique et sur le deuxième signal ultrasonique une méthode du type « *Zero Crossing* ».

11. Procédé de mesure selon la revendication 1, dans lequel la valeur DToF est estimée en mettant en œuvre sur le premier signal ultrasonique et sur le deuxième signal ultrasonique une méthode d'intercorrélation.

12. Compteur de fluide à ultrason comportant un premier transducteur (12a), un deuxième transducteur (12b), et un module de mesure (13) relié au premier transducteur et au deuxième transducteur, le module de mesure comprenant un composant de traitement (14), le composant de traitement étant agencé pour mettre en œuvre le procédé de mesure selon l'une des revendications précédentes.

13. Programme d'ordinateur comprenant des instructions pour mettre en œuvre, par le composant de traitement (14) du compteur de fluide à ultrason (10) selon la revendication 12, le procédé de mesure selon l'une des revendications 1 à 11.

14. Moyens de stockage, **caractérisés en ce qu'**ils stockent un programme d'ordinateur comprenant des instructions pour mettre en œuvre, par le composant de traitement (14) du compteur de fluide à ultrason (10) selon la revendication 12, le procédé de mesure selon l'une des revendications 1 à 11.

**Patentansprüche**

1. Messverfahren zum Messen einer Geschwindigkeit eines Fluids, das in einer Messvorrichtung (11) durchgeführt wird, die einen ersten Wandler (12a), einen zweiten Wandler (12b) und ein Messmodul (13) umfasst, welches eine Verarbeitungskomponente (14) enthält, wobei das Messverfahren mindestens eine erste Messphase umfasst, die die aufeinanderfolgenden Schritte umfasst:

- Veranlassen, dass die Verarbeitungskomponente (14) zu einer selben Sendezeit ein erstes elektrisches Anregungssignal (18), das am Eingang des ersten Wandlers angelegt wird, und ein zweites elektrisches Anregungssignal (19), das am Eingang des zweiten Wandlers angelegt wird, aussendet, derart, dass der erste Wandler (12a) ein erstes Ultraschallsignal (21) erzeugt, das in dem Fluid bis zum zweiten Wandler (12b) einen Pfad definierter Länge (L) zurücklegt, und derart, dass der zweite Wandler (12b) ein zweites Ultraschallsignal (22) erzeugt, das in dem Fluid bis zum ersten Wandler (12a) den Pfad definierter Länge in einer entgegengesetzten Richtung zurücklegt;
- Versetzen der Verarbeitungskomponente (14) in Stand-by;
- Reaktivieren der Verarbeitungskomponente (14) nach einer vorbestimmten Stand-by-Dauer $(D_v)$;
- Veranlassen, dass durch den zweiten Wandler und dann durch die Verarbeitungskomponente das erste Ultraschallsignal erfasst wird und durch den ersten Wandler und dann durch die Verarbeitungskomponente das zweite Ultraschallsignal erfasst wird;
- Schätzen eines Wertes DToF einer Differenz zwischen einer zweiten Flugzeit des zweiten Ultraschallsignals (22) und einer ersten Flugzeit des ersten Ultraschallsignals (21), und Verwenden des Wertes DToF, um die Geschwindigkeit des Fluids zu schätzen.

2. Messverfahren nach Anspruch 1, ferner umfassend mindestens eine zweite Messphase, die verwendet wird, um einen Wert SumToF einer Summe der ersten Flugzeit und der zweiten Flugzeit zu schätzen, wobei die Schätzung der Geschwindigkeit des Fluids auch den Wert SumToF verwendet.

3. Messverfahren nach Anspruch 2, wobei die zweite Messphase ähnlich zur ersten Messphase ist, aber den Schritt des Versetzens der Verarbeitungskomponente (14) in Stand-by nicht umfasst.

4. Messverfahren nach Anspruch 2, bei dem mehrere erste Messphasen zwischen zwei aufeinanderfolgenden zweiten Messphasen durchgeführt werden, und bei dem bei jeder ersten Messphase die Geschwindigkeit des Fluids geschätzt wird, indem der Wert SumToF, der während der letzten zweiten Messphase erhalten wird, die der genannten ersten Messphase vorausgeht, verwendet wird.

5. Messverfahren nach Anspruch 2, bei dem die Geschwindigkeit des Fluids durch die Formel geschätzt wird:

$$\bar{V} = 2L. \frac{DToF}{SumToF^2 - DToF^2}$$

wobei L die definierte Länge des Pfades ist.

6. Messverfahren nach einem der vorhergehenden Ansprüche, wobei die Verarbeitungskomponente ein Mikrocontroller (14) ist, in dem ein Analog-Digital-Umsetzer (15) integriert ist, der einen ersten Eingang (16) und einen zweiten Eingang (17) hat, die gemultiplext sind, wobei die erste Messphase den Schritt des Anlegens des ersten Ultraschallsignals (21) nach dessen Empfang an dem ersten Eingang (16) umfasst, um digitalisiert zu werden, und den Schritt des Anlegens des zweiten Ultraschallsignals (22) nach dessen Empfang an dem zweiten Eingang (17), um digitalisiert zu werden.

7. Messverfahren nach Anspruch 6, ferner umfassend eine Kalibrierungsphase, die den Schritt des Kompensierens einer Phasenverschiebung zwischen den vom Analog-Digital-Umsetzer (15) erzeugten Abtastungen des ersten Ultraschallsignals (21) und des zweiten Ultraschallsignals (22) umfasst.

8. Messverfahren nach einem der Ansprüche 1 bis 5, wobei die Verarbeitungskomponente ein Mikrocontroller ist, in dem ein erster Analog-Digital-Umsetzer, der einen ersten Eingang hat, und ein zweiter Analog-Umsetzer, der einen zweiten Eingang hat, integriert sind, wobei die erste Messphase den Schritt des Anlegens des ersten Ultraschallsignals (21) nach dessen Empfang an dem ersten Eingang umfasst, um digitalisiert zu werden, sowie den Schritt des Anlegens des zweiten Ultraschallsignals (22) nach dessen Empfang an dem zweiten Eingang, um digitalisiert zu werden.

9. Messverfahren nach Anspruch 1, bei dem das erste Ultraschallsignal (21) und das zweite Ultraschallsignal (22) jeweils nacheinander Vorkeulen (26) und dann Messkeulen (28) umfassen, wobei die Messkeulen (28) verwendet werden, um den Wert DToF zu schätzen, wobei die Vorkeulen (26) nicht genutzt werden, da sie möglicherwiese ungenau sind, wobei die vorbestimmte Stand-by-Dauer ($D_V$) derart ist, dass die Verarbeitungskomponente reaktiviert wird, nachdem mindestens einige der Vorkeulen (26) des ersten Ultraschallsignals (21) von dem zweiten Wandler empfangen worden sind und mindestens einige der Vorkeulen (26) des zweiten Ultraschallsignals (22) von dem ersten Wandler empfangen worden sind.

10. Messverfahren nach Anspruch 1, bei dem der Wert DToF geschätzt wird, indem an dem ersten Ultraschallsignal und an dem zweiten Ultraschallsignal ein Verfahren vom Typ Nulldurchgang durchgeführt wird.

11. Messverfahren nach Anspruch 1, bei dem der Wert DToF geschätzt wird, indem an dem ersten Ultraschallsignal und an dem zweiten Ultraschallsignal ein Kreuzkorrelationsverfahren durchgeführt wird.

12. Ultraschallfluidzähler, umfassend einen ersten Wandler (12a), einen zweiten Wandler (12b) und ein Messmodul (13), das mit dem ersten Wandler und mit dem zweiten Wandler verbunden ist, wobei das Messmodul eine Verarbeitungskomponente (14) umfasst, wobei die Verarbeitungskomponente ausgebildet ist, um das Messverfahren nach einem der vorhergehenden Ansprüche durchzuführen.

13. Computerprogramm, umfassend Anweisungen zum Durchführen des Messverfahrens nach einem der Ansprüche 1 bis 11 mittels der Verarbeitungskomponente (14) des Ultraschallfluidzählers (10) nach Anspruch 12.

14. Speichermittel, **dadurch gekennzeichnet, dass** sie ein Computerprogramm speichern, das Anweisungen zum Durchführen des Messverfahrens nach einem der Ansprüche 1 bis 11 mittels der Verarbeitungskomponente (14) des Ultraschallfluidzählers (10) nach Anspruch 12 umfasst.

## Claims

1. A measurement method for measuring a fluid speed, the method being performed by a measurement device (11) comprising a first transducer (12a), a second transducer (12b), and a measurement module (13) comprising a processor component (14), the measurement method comprising at least a first measurement stage comprising the following successive steps:

   ▪ causing the processor component (14) to emit at the same emission time both a first electrical excitation signal (18) that is applied as input to the first transducer and also a second electrical excitation signal (19) that is applied as input to the second transducer, such that the first transducer (12a) generates a first ultrasonic signal (21) that travels through the fluid to the second transducer (12b) along a path of defined length (L), and such that the second transducer (12b) generates a second ultrasonic signal (22) that travels in the opposite direction through the fluid to the first transducer (12a) along the path of defined length;
   ▪ putting the processor component (14) on standby;
   ▪ reactivating the processor component (14) after a predetermined standby duration ($D_V$);
   ▪ causing the first ultrasonic signal to be acquired by the second transducer and then by the processor component, and causing the second ultrasonic signal to be acquired by the first transducer and then by the processor component;
   ▪ estimating a value DToF of a difference between a second time of flight of the second ultrasonic signal (22) and a first time of flight of the first ultrasonic signal (21), and using the value DToF to estimate the speed of the fluid.

2. A measurement method according to claim 1, further comprising at least one second measurement stage used for estimating a value SumToF for the sum of the first time of flight plus the second time of flight, with estimation of the speed of the fluid making use also of the value SumToF.

3. A measurement method according to claim 2, the second measurement stage being similar to the first measurement stage, but not including the step of putting the processor component (14) on standby.

4. A measurement method according to claim 2, wherein a plurality of first measurement stages are performed between two successive second measurement stages, and wherein, for each first measurement stage, the fluid speed is estimated while using the value SumToF as obtained during the latest second measurement stage preceding said first measurement stage.

5. A measurement method according to claim 2, wherein the speed of the fluid is estimated using the formula:

$$\bar{V} = 2L.\frac{DToF}{SumToF^2 - DToF^2}$$

where L is the defined length of the path.

6. A measurement method according to any preceding claim, the processor component being a microcontroller (14) having integrated therein an ADC (15) having first and second inputs (16 and 17) that are multiplexed, the first measurement stage including the step of applying the first ultrasonic signal (21), after it has been received, to the first input (16) in order to be digitized, and the step of applying the second ultrasonic signal (22), after it has been received, to the second input (17) in order to be digitized.

7. A measurement method according to claim 6, further comprising a calibration stage comprising the step of compensating a phase offset between the sampling operations performed by the ADC (15) when sampling the first and second ultrasonic signals (21 and 22).

8. A measurement method according to any one of claims 1 to 5, the processor component being a microcontroller having integrated therein a first ADC having a first input and a second ADC having a second input, the first measurement stage including the step of applying the first ultrasonic signal (21), after it has been received, to the first input in order to be digitized, and the step of applying the second ultrasonic signal (22), after it has been received, to the second input in order to be digitized.

9. A measurement method according to claim 1, wherein each of the first and second ultrasonic signals (21 and 22) comprises in succession preliminary lobes (26) and then measurement lobes (28), the measurement lobes (28) being used for estimating the value DToF, the preliminary lobes (26) not being used since they are potentially inaccurate, the predetermined standby duration ($D_v$) being such that the processor component is reactivated after at least some of the preliminary lobes (26) of the first ultrasonic signal (21) have been received by the second transducer and at least some of the preliminary lobes (26) of the second ultrasonic signal (22) have been received by the first transducer.

10. A measurement method according to claim 1, wherein the value DToF is estimated by performing a zero crossing type method both on the first ultrasonic signal and on the second ultrasonic signal.

11. A measurement method according to claim 1, wherein the value DToF is estimated by performing a cross correlation method on the first and second ultrasonic signals.

12. An ultrasonic fluid meter comprising a first transducer (12a), a second transducer (12b), and a measurement module (13) connected to the first transducer and to the second transducer, the measurement module comprising a processor component (14), the processor component being arranged to perform the measurement method according to any preceding claim.

13. A computer program including instructions for enabling the processor component (14) of the ultrasonic fluid meter (10) according to claim 12 to perform the measurement method according to any one of claims 1 to 11.

14. Storage means **characterized in that** they store a computer program including instructions for enabling the processor component (14) of the ultrasonic fluid meter (10) according to claim 12 to perform the measurement method according to any one of claims 1 to 11.

Fig. 1

Fig. 2

Fig. 3

## RÉFÉRENCES CITÉES DANS LA DESCRIPTION

**Documents brevets cités dans la description**

- EP 0670477 A
- US 4782697 A
- US 2004107779 A